# FASCICULE DE BREVET EUROPEEN

(11) **EP 3 917 807 B1**
(45) Date de publication et mention de la délivrance du brevet: **15.03.2023**
(21) Numéro de dépôt: 20705437.0
(22) Date de dépôt: 24.01.2020
(51) Int. Cl.: B60R 13/04, B62D 25/16

(54) **ENTRETOISE DE FIXATION D'UN PARE-BOUE DE VÉHICULE AUTOMOBILE**
ABSTANDSHALTER ZUR BEFESTIGUNG EINES KOTFLÜGELS EINES KRAFTFAHRZEUGES
SPACER FOR ATTACHING A MUDGUARD OF A MOTOR VEHICLE

(30) Priorité: 29.01.2019 FR 1900767
(43) Date de publication de la demande: 08.12.2021
(73) Titulaire: PSA Automobiles SA, 78300 Poissy (FR)
(72) Inventeur: RIVIERRE, Laurent, 75015 PARIS (FR); VILLA, Laurent, 91460 MARCOUSSIS (FR); GALLERNE, Jean Christophe, 78114 MAGNY LES HAMEAUX (FR)
(86) Numéro de dépôt international: PCT/FR2020/050103
(87) Numéro de publication internationale: WO 2020/157415

(56) Documents cités:
- CN-U- 207 683 628
- CN-U- 207 984 746
- FR-B1- 3 045 551
- JP-U- S58 112 682

## Description

La présente invention revendique la priorité de la demande française 1900767 déposée le 29 Janvier 2019.

Le contexte technique de la présente invention est celui des pare-boue de véhicule automobile, et notamment de l'assemblage des pare-boue sur une structure du véhicule automobile.

Les passages de roues d'un véhicule automobile sont généralement équipés d'un pare-boue permettant d'éviter des projections de matières sur le véhicule automobile lors de son déplacement. De manière connue, les pare-boue connus forment une cloison décrivant sensiblement un demi-cercle et délimitant un logement de roue enveloppant partiellement la roue destinée à y être logée. De manière connue, le pare-boue est fixé à la structure du véhicule automobile par l'intermédiaire d'organes de fixation insérés au travers d'une pluralité d'ouvertures d'assemblage du pare-boue.

Dans l'état de la technique, on connait des organes de fixation formés par :
- des inserts montés traversant au travers des ouvertures d'assemblage du pare-boue d'une part, et d'autre part au travers d'ouvertures complémentaires situées sur la structure du véhicule automobile ;
- des vis de fixation collaborant avec les inserts afin de fixer solidairement le pare-boue sur la structure du véhicule automobile.

Afin de faciliter le montage et de limiter les risques d'erreurs au montage, il est connu d'utiliser une même famille de vis de fixation pour tous les organes de fixation. Un inconvénient résultant de cette pratique consiste en ce que les vis de fixation dépassent d'une longueur variable en arrière de la structure du véhicule automobile, en fonction de l'épaisseur de ladite structure et/ou du pare-boue au niveau de l'ouverture d'assemblage. En particulier, il est connu qu'à proximité d'un conduit d'alimentation en essence, un tel dépassement de la vis de fixation en arrière de la structure du véhicule automobile conduit à un accroissement des risques de pannes, par percement dudit conduit d'alimentation en essence par exemple.

Bien que non adapté au problème du non percement d'un conduit d'alimentation en essence du véhicule automobile, on connait le document FR3045551B1 qui décrit un pare-boue comprenant des pattes de fixation faisant saillie par rapport à la cloison du pare-boue afin de faciliter l'assemblage d'une bavette aérodynamique. Cette configuration permet ainsi de réduire le dépassement de la vis de fixation dans la zone arrière au pare-boue.

La présente invention a pour objet de proposer un nouveau pare-boue afin de répondre au moins en grande partie aux problèmes précédents et de conduire en outre à d'autres avantages.

Un autre but de l'invention est de réduire les risques de percement d'un conduit d'alimentation en essence du véhicule automobile, du fait d'un dépassement de la vis de fixation en arrière du pare-boue.

Un autre but de l'invention est de faciliter le montage du pare-boue sur la structure du véhicule automobile.

Selon un premier aspect de l'invention, on atteint au moins l'un des objectifs précités avec un pare-boue de véhicule automobile formant une cloison décrivant sensiblement un demi-cercle et délimitant un logement de roue destiné à recevoir une roue de véhicule automobile, le pare-boue comprenant :
- une pluralité d'ouvertures d'assemblage, chaque ouverture d'assemblage étant destinée à recevoir un organe de fixation dudit pare-boue à une structure du véhicule automobile ;
- une entretoise située au niveau de l'une des ouvertures d'assemblage et sur une face arrière de la cloison opposée au logement de roue par rapport à ladite cloison, l'entretoise s'étendant en saillie par rapport à la face arrière de la cloison prise au niveau de l'ouverture d'assemblage.

Dans le pare-boue conforme au premier aspect de l'invention, l'entretoise comprend une première collerette et une deuxième collerette, la première collerette et la deuxième collerette étant concentriques entre elles.

Ainsi, la présence de l'entretoise permet de rallonger la distance entre la face de la cloison située du côté du logement de roue et la structure du véhicule destinée à être mise en appui contre le pare-boue conforme au premier aspect de l'invention. Consécutivement, à longueur de vis de fixation constante, la vis de fixation débouchera moins en présence de l'entretoise qu'en son absence.

En outre, la présence des deux collerettes permet de renforcer l'entretoise et de réduire les risques de fluage durant le montage du pare-boue sur la structure du véhicule automobile. Le montage du pare-boue sur la structure du véhicule automobile est ainsi facilité.

De manière préférée, l'invention conforme au premier aspect a trait au pare-boue situé du côté d'un conduit d'alimentation en essence au moteur thermique, relativement à un axe latéral di véhicule automobile, pris perpendiculairement à une direction d'avancement dudit véhicule automobile. Ainsi, si le conduit d'alimentation en essence est situé sur le côté gauche du véhicule automobile, alors le pare-boue conforme au premier aspect de l'invention est un pare-boue gauche de véhicule automobile. A contrario, si le conduit d'alimentation en essence est situé sur le côté droit du véhicule automobile, alors le pare-boue conforme au premier aspect de l'invention est un pare-boue droit de véhicule automobile.

Complémentairement ou alternativement, l'invention conforme au premier aspect a trait au pare-boue situé au niveau d'une partie du véhicule automobile où est présent un moteur thermique, relativement à un axe longitudinal du véhicule automobile pris suivant une direction d'avancement dudit véhicule automobile. Ainsi, si le moteur thermique est situé à l'avant du véhicule automobile, alors le pare-boue conforme au premier aspect de l'invention est un pare-boue avant de véhicule automobile. A contrario, si le moteur thermique est situé à l'arrière du véhicule automobile, alors le pare-boue conforme au premier aspect de l'invention est un pare-boue arrière de véhicule automobile.

Selon un mode de réalisation préféré de l'invention, le pare-boue conforme au premier aspect de l'invention est un pare-boue avant droit.

Le pare-boue conforme au premier aspect de l'invention comprend avantageusement au moins un des perfectionnements ci-dessous, les caractéristiques techniques formant ces perfectionnements pouvant être prises seules ou en combinaison :
- l'ouverture d'assemblage au niveau de laquelle est située l'entretoise est située en regard d'un brancard du véhicule automobile, le brancard formant structure dudit véhicule automobile, l'ouverture d'assemblage étant située à proximité d'un conduit d'alimentation en essence du véhicule automobile lorsque le pare-boue est assemblé sur ledit brancard ;
- l'entretoise est située à la périphérie à l'ouverture d'assemblage ;
- l'entretoise est issue de matière avec le pare-boue. Par « issue de matière », on comprend que l'entretoise et le pare-boue sont issus d'un même procédé de fabrication, de manière simultanée, tel que par exemple par moulage. Consécutivement, l'entretoise ne peut être séparée du pare-boue sans détériorer ou détruire l'entretoise ou une partie du pare-boue ;
- la première et/ou la deuxième collerette formant l'entretoise sont concentriques avec l'ouverture d'assemblage. En d'autres termes, une distance séparant un pourtour de l'ouverture d'assemblage et la première collerette est avantageusement constante sur tout ou partie dudit pourtour de l'ouverture d'assemblage ; et/ou une distance séparant un pourtour de l'ouverture d'assemblage et la deuxième collerette est avantageusement constante sur tout ou partie dudit pourtour de l'ouverture d'assemblage ;
- l'entretoise comprend au moins deux nervures reliant la première collerette et la deuxième collerette. Les nervures sont configurées pour permettre à l'entretoise de ne pas être soumise à un effet de fluage lorsque le pare-boue est assemblé sur la structure du véhicule automobile ;
- en particulier, les nervures sont configurées pour permettre à l'entretoise de résister à un couple de serrage inférieure ou égal à 4 Nm ;
- les nervures s'étendent radialement par rapport à l'ouverture d'assemblage ;
- les nervures sont angulairement régulièrement réparties autour de l'ouverture d'assemblage. De manière préférentielle, les nervures sont deux à deux diamétralement opposées par rapport à l'ouverture d'assemblage ;
- l'entretoise a, selon une direction perpendiculaire à la face arrière du pare-boue prise au niveau de l'ouverture d'assemblage, une forme en dépouille selon un angle de dépouille strictement positif, et préférentiellement égal à 1° ;
- l'entretoise comprend un bord d'appui parallèle à la face arrière du pare-boue prise au niveau de l'ouverture d'assemblage. Le bord d'appui est destiné à servir d'appui pour un insert de l'organe de fixation lors de l'assemblage du pare-boue sur la structure du véhicule automobile ;
- le bord d'appui est situé à une distance supérieure ou égale à 5 mm par rapport à la face arrière du pare-boue prise au niveau de l'ouverture d'assemblage, préférentiellement comprise entre 6.5 mm et 7.5 mm ;
- le bord d'appui pris au niveau de la première collerette est situé à une première distance de la face arrière du pare-boue prise au niveau de l'ouverture d'assemblage, et le bord d'appui pris au niveau de la deuxième collerette est situé à une deuxième distance de la face arrière du pare-boue prise au niveau de l'ouverture d'assemblage, la première distance étant inférieure à la deuxième distance. Alternativement, la première distance est supérieure à la deuxième distance. En particulier, un écart entre la première distance et la deuxième distance est avantageusement sensiblement égal à 1 mm afin de permettre un montage optimal de l'insert au travers de l'ouverture d'assemblage et contre le bord d'appui correspondant ;
- la première collerette est située radialement à l'intérieur par rapport à la deuxième collerette, relativement à l'ouverture d'assemblage.

Selon un deuxième aspect de l'invention, il est proposé un ensemble pour roue de véhicule automobile, ledit ensemble comprenant (i) un pare-boue conforme au premier aspect de l'invention ou selon l'un quelconque de ses perfectionnements, et (ii) une pluralité d'organes de fixation collaborant avec chaque ouverture d'assemblage correspondante du pare-boue, chaque organe de fixation comprenant (a) un insert traversant simultanément l'ouverture d'assemblage correspondante du pare-boue et une lumière de la structure du véhicule automobile située en regard de l'ouverture d'assemblage, et (b) une vis de fixation collaborant avec l'insert.

L'ensemble conforme au deuxième aspect de l'invention comprend avantageusement au moins un des perfectionnements ci-dessous, les caractéristiques techniques formant ces perfectionnements pouvant être prises seules ou en combinaison :
- l'insert de l'organe de fixation est en appui contre le bord d'appui de l'entretoise du pare-boue ;
- selon une première variante de réalisation, l'insert de l'organe de fixation est en appui contre le bord d'appui de la première collerette de l'entretoise, c'est-à-dire contre le bord d'appui de la première collerette située radialement à l'intérieur de la deuxième collerette. Selon une deuxième variante de réalisation alternative à la première variante de réalisation, l'insert de l'organe de fixation est en appui contre le bord d'appui de la deuxième collerette de l'entretoise, c'est-à-dire contre le bord d'appui de la première collerette située radialement à l'extérieur de la deuxième collerette.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre représente une vue schématique de profil d'un véhicule automobile équipé d'un pare-boue conforme au premier aspect de l'invention ;
[Fig.2] illustre une vue en perspective d'un détail d'un premier exemple de réalisation du pare-boue conforme au premier aspect de l'invention ;
[Fig.3] illustre une vue en en coupe du pare-boue conforme au premier aspect de l'invention.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

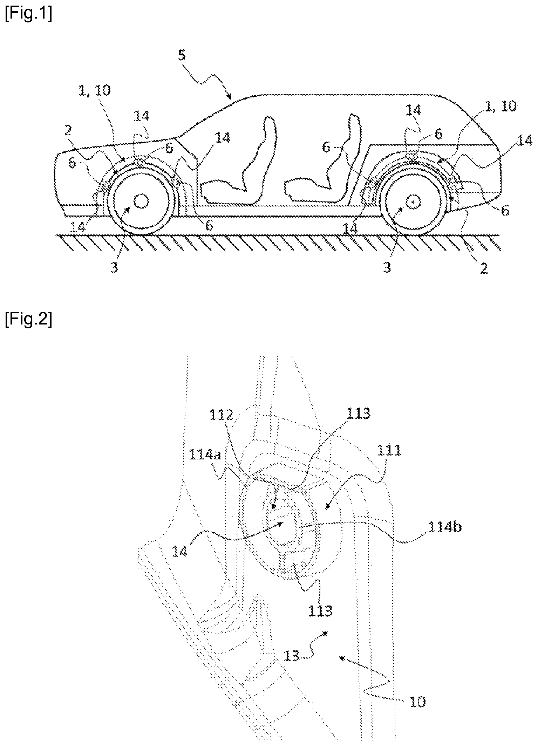

En référence à la FIGURE 1, un véhicule automobile 5 est illustré. Le véhicule automobile 5 comprend quatre roues 3 formant des liaisons au sol. Chaque roue 3 est logée dans un logement de roue 2 délimité au moins en partie par un pare-boue 1. Chaque pare-boue 1 forme une cloison 10 décrivant sensiblement un demi-cercle autour de la roue 3 et permettant d'éviter des projections de matières sur le véhicule automobile 5 lors de son déplacement.

Le pare-boue 1 est fixé à une structure 4 du véhicule automobile 5 par l'intermédiaire d'organes de fixation 6 insérés au travers d'une pluralité d'ouvertures d'assemblage 14 du pare-boue 1. A titre d'exemple non limitatif, la structure 4 du véhicule comprend tout ou partie d'un châssis du véhicule automobile 5 et/ou des pièces liées solidairement audit châssis, de manière directe ou indirecte.

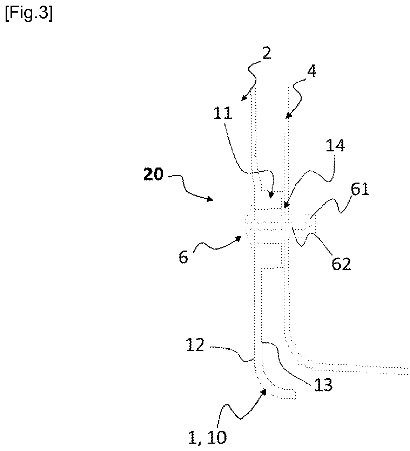

En référence aux FIGURES 2 et 3, un exemple de réalisation d'un pare-boue 1 conforme au premier aspect de l'invention va maintenant être décrit en détail. Un tel pare-boue 1 conforme au premier aspect de l'invention est plus particulièrement du type d'un pare-boue 1 arrière du véhicule automobile 5. La cloison 10 formant le pare-boue 1 comprend une face avant 12 située du côté le logement de roue 2 et une face arrière 13 située du côté de la structure 4 du véhicule automobile 5.

Dans l'exemple de réalisation illustré sur les FIGURES 2 et 3, le pare-boue 1 comprend une entretoise 11 située au niveau de l'une de ses ouvertures d'assemblage 14. L'entretoise 11 est située sur la face arrière 13 de la cloison 10 : l'entretoise 11 s'étend en saillie par rapport à la face arrière 13 de la cloison 10 prise au niveau de l'ouverture d'assemblage 14. La présence d'une telle entretoise permet d'augmenter localement une épaisseur de la cloison 10 formant le pare-boue 1. Consécutivement, l'organe de fixation 6 collaborant avec l'ouverture d'assemblage 14 traverse une plus grande épaisseur de matière au niveau de la cloison 10 et débouche moins au niveau de la face arrière 13 de ladite cloison qu'en l'absence de l'entretoise 11.

Cette configuration avantageuse permet de réduire le risque qu'une vis de fixation 62 de l'organe de fixation 6 ne débouche au niveau de la structure 4 du véhicule automobile 5, et notamment à proximité d'un conduit d'alimentation en essence, non représenté sur les FIGURES. Plus particulièrement, et comme visible sur la FIGURE 3, la vis de fixation 62 de l'organe de fixation 6 est en prise dans un insert 61 de montage dudit organe de fixation 6.

Conformément à l'invention selon son premier aspect, l'entretoise 11 du pare-boue 1 comprend une première collerette 111 et une deuxième collerette 112, la première collerette 111 et la deuxième collerette 112 étant concentriques entre elles.

L'entretoise est avantageusement issue de matière avec la cloison 10 formant le pare-boue 1 : la première 111 et la deuxième 112 collerette sont fabriqués avec la cloison 10 par un unique procédé de fabrication, tel que par exemple par moulage, afin de faciliter sa réalisation et de réduire les coûts de fabrication.

Comme visible sur la FIGURE 2, la première 111 et la deuxième collerette 112 formant l'entretoise 11 sont concentriques avec l'ouverture d'assemblage 14. La première 111 et la deuxième 112 collerette forment chacune un fût coaxial avec l'ouverture d'assemblage 14, le fût s'étendant en saillie par rapport à la face arrière 13 de la cloison 10.

Dans l'exemple de réalisation illustré sur la FIGURE 2, l'entretoise 11 comprend deux nervures 113 reliant entre elles la première collerette 111 et la deuxième collerette 112. Cette configuration permet d'améliorer les performances mécaniques de l'entretoise 11, notamment lors du montage du pare-boue 1 sur la structure 4 du véhicule automobile 5. De manière plus générale, l'entretoise 11 comprend au moins deux nervures 113 semblables à celles illustrées sur la FIGURE 2.

Les nervures 113 permettent ainsi à l'entretoise 11 de ne pas être soumise à un effet de fluage lorsque le pare-boue 1 est assemblé sur la structure 4 du véhicule automobile 5. En particulier, les nervures 113 sont configurées, collectivement avec les première 111 et deuxième 112 collerettes formant l'entretoise 10, pour résister à un couple de serrage inférieure ou égal à 4 Nm.

Chaque nervure 113 s'étend radialement par rapport à l'ouverture d'assemblage 14. De manière avantageuse, lorsque l'entretoise 11 comprend deux ou plus nervures 113, lesdites nervures 113 sont angulairement régulièrement réparties autour de l'ouverture d'assemblage 14. Dans l'exemple illustré sur la FIGURE 2, les deux nervures 113 sont diamétralement opposées par rapport à l'ouverture d'assemblage 14, de sorte qu'elles sont distantes entre elles par un angle de 180° environ.

Dans une direction perpendiculaire à la face arrière 13 du pare-boue 1 prise au niveau de l'ouverture d'assemblage 14, les première 111 et deuxième 112 collerettes de l'entretoise 11 prennent la forme d'une cloison cylindrique autour de ladite ouverture d'assemblage 14. Plus particulièrement, chaque collerette 111, 112 a une forme en dépouille selon un angle de dépouille strictement positif, et préférentiellement égal à 1°, afin de faciliter la fabrication du pare-boue 1, en particulier lors d'une étape d'extraction dudit pare-boue 1 de son moule de fabrication.

L'entretoise 11 comprend ainsi un bord d'appui 114a, 114b distant de la face arrière 13 de la cloison 10 du pare-boue 1. Le bord d'appui 114a, 114b forme ainsi un bord terminal libre de chaque collerette 111, 112 de l'entretoise 10. Le bord d'appui 114a, 114b est destiné à servir d'appui pour un insert 61 de l'organe de fixation 6 lors de l'assemblage du pare-boue 1 sur la structure 4 du véhicule automobile 5. Afin de faciliter cet assemblage, le bord d'appui 114a, 114b est avantageusement parallèle à la face arrière 113 de la cloison 10 formant le pare-boue 1, prise au niveau de l'ouverture d'assemblage 14.

Compte tenu des contraintes d'assemblage et des dimensions standards de l'organe de fixation 6, le bord d'appui 114a, 114b de l'entretoise 11 est situé à une distance préférentiellement comprise entre 6.5 mm et 7.5 mm par rapport à la face arrière 13 du pare-boue 1 prise au niveau de l'ouverture d'assemblage 14.

Selon une première variante de réalisation, le bord d'appui 114a de la première collerette 111 et le bord d'appui 114b de la deuxième collerette 112 sont situés à une même distance par rapport à la face arrière 13 de la cloison 10 formant le pare-boue 1.

Selon une deuxième variante de réalisation, le bord d'appui 114a de la première collerette 111 est situé à une distance par rapport à la face arrière 13 inférieure à la distance séparant le bord d'appui 114b de la deuxième collerette 112 par rapport à ladite face arrière 13.

Selon une troisième variante de réalisation, le bord d'appui 114a de la première collerette 111 est situé à une distance par rapport à la face arrière 13 supérieure à la distance séparant le bord d'appui 114b de la deuxième collerette 112 par rapport à ladite face arrière 13.

Comme visible sur la FIGURE 3, l'insert 61 de l'organe de fixation 6 est en appui contre le bord d'appui 114a, 114b de l'entretoise : soit contre le bord d'appui 114a de la première collerette 111, soit contre le bord d'appui 114b de la deuxième collerette 112.

Comme visible sur la FIGURE 3, et conformément à un deuxième aspect de l'invention, l'invention a aussi trait à un ensemble 20 pour roue 3 de véhicule automobile 5, l'ensemble 20 comprenant un pare-boue 1 tel que décrit précédemment et une pluralité d'organes de fixation 6 collaborant avec chaque ouverture d'assemblage 14 du pare-boue 1, chaque organe de fixation 6 comprenant (i) un insert 61 traversant simultanément l'ouverture d'assemblage 14 du pare-boue 1 et une lumière de la structure 4 du véhicule automobile 5 située en regard de l'ouverture d'assemblage 14, et (ii) une vis de fixation 62 collaborant avec l'insert 61 pour permettre la fixation solidaire du pare-boue 1 sur la structure 4.

En synthèse, l'invention concerne une entretoise 11 pour l'assemblage d'un pare-boue 1 sur une structure 4 de véhicule automobile 5, l'entretoise comprenant une première collerette 111 et une deuxième collerette 112, concentrique à ladite première collerette 111 afin d'augmenter la tenue au fluage de l'entretoise. L'entretoise 11 est située sur une face arrière 13 du pare-boue 1, autour d'une ouverture d'assemblage 14 au travers de laquelle un organe de fixation 6 est inséré afin de fixer solidairement le pare-boue 1 sur la structure 4 du véhicule automobile 5.

Bien sûr, l'invention n'est pas limitée aux exemples qui viennent d'être décrits et de nombreux aménagements peuvent être apportés à ces exemples sans sortir du cadre de l'invention, qui est définie exclusivement par les revendications annexées. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Pare-boue (1) de véhicule automobile (5) formant une cloison (10) décrivant sensiblement un demi-cercle et délimitant un logement de roue (2) destiné à recevoir une roue (3) de véhicule automobile (5), le pare-boue (1) comprenant :
- une pluralité d'ouvertures d'assemblage (14), chaque ouverture d'assemblage (14) étant destinée à recevoir un organe de fixation (6) dudit pare-boue (1) à une structure (4) du véhicule automobile (5) ;
- une entretoise (11) située au niveau de l'une des ouvertures d'assemblage (14) et sur une face arrière (13) de la cloison (10) opposée au logement de roue (2) par rapport à ladite cloison (10), l'entretoise (11) s'étendant en saillie par rapport à la face arrière (13) de la cloison (10) prise au niveau de l'ouverture d'assemblage (14) ;
**caractérisé en ce que** l'entretoise (11) comprend une première collerette (111) et une deuxième collerette (112), la première collerette (111) et la deuxième collerette (112) étant concentriques entre elles.

2. Pare-boue (1) selon la revendication précédente, dans lequel l'entretoise (11) est issue de matière avec le pare-boue (1).

3. Pare-boue (1) selon l'une quelconque des revendications précédentes, dans lequel la première (111) et la deuxième (112) collerette formant l'entretoise (11) sont concentriques avec l'ouverture d'assemblage (14).

4. Pare-boue (1) selon la revendication précédente, dans lequel l'entretoise (11) comprend au moins deux nervures (113) reliant la première collerette (111) et la deuxième collerette (112).

5. Pare-boue (1) selon la revendication précédente, dans lequel les nervures (113) sont configurées pour permettre à l'entretoise (11) de résister à un couple de serrage inférieure ou égal à 4Nm.

6. Pare-boue (1) selon l'une quelconque des revendications 4 ou 5, dans lequel les nervures (113) s'étendent radialement par rapport à l'ouverture d'assemblage (14).

7. Pare-boue (1) selon l'une quelconque des revendications précédentes, dans lequel l'entretoise (11) comprend un bord d'appui (114a, 114b) parallèle à la face arrière (13) du pare-boue (1) prise au niveau de l'ouverture d'assemblage (14).

8. Pare-boue (1) selon la revendication précédente, dans lequel le bord d'appui (114a, 114b) est situé à une distance supérieure ou égale à 5 mm par rapport à la face arrière (13) du pare-boue (1) prise au niveau de l'ouverture d'assemblage (14), préférentiellement comprise entre 6.5mm et 7.5mm

9. Pare-boue (1) selon l'une quelconque des revendications 7 ou 8, dans lequel le bord d'appui (114a, 114b) pris au niveau de la première collerette (111) est situé à une première distance de la face arrière (13) du pare-boue (1) prise au niveau de l'ouverture d'assemblage (14), et le bord d'appui (114a, 114b) pris au niveau de la deuxième collerette (112) est situé à une deuxième distance de la face arrière (13) du pare-boue (1) prise au niveau de l'ouverture d'assemblage (14), la première distance étant inférieure à la deuxième distance.

10. Ensemble (20) pour roue (3) de véhicule automobile (5), ledit ensemble comprenant :
- un pare-boue (1) selon l'une quelconque des revendications précédentes ;
- une pluralité d'organes de fixation (6) collaborant avec chaque ouverture d'assemblage (14) correspondante du pare-boue (1), chaque organe de fixation (6) comprenant :
- un insert (61) traversant simultanément l'ouverture d'assemblage (14) correspondante du pare-boue (1) et une lumière de la structure (4) du véhicule automobile (5) située en regard de l'ouverture d'assemblage (14) ;
- une vis de fixation (62) collaborant avec l'insert (61). !

## Patentansprüche

1. Kotflügel (1) eines Kraftfahrzeugs (5), der eine Trennwand (10) bildet, die im Wesentlichen einen Halbkreis beschreibt und ein Radgehäuse (2) zur Aufnahme eines Rades (3) eines Kraftfahrzeugs (5) begrenzt, wobei die Kotflügel (1) umfasst:
- eine Mehrzahl von Verbindungsöffnungen (14), wobei jede Verbindungsöffnung (14) zur Aufnahme eines Befestigungselements (6) der Blende (1) an einer Struktur (4) des Kraftfahrzeugs (5) bestimmt ist;
- einem Abstandhalter (11), der an einer der Verbindungsöffnungen (14) und an einer der Radaufnahme (2) gegenüberliegenden Rückseite (13) der Trennwand (10) angeordnet ist, wobei sich der Abstandhalter (11) von der Rückseite (13) der Trennwand (10) aus der Höhe des Abstandhalters erstreckt Verbindungsöffnung (14);
**Dadurch gekennzeichnet, dass** der Abstandshalter (11) einen ersten Flansch (111) und einen zweiten Flansch (112) aufweist, wobei der erste Flansch (111) und der zweite Flansch (112) konzentrisch zueinander sind.

2. Blende (1) nach dem vorhergehenden Anspruch, wobei der Abstandshalter (11) aus Material mit der Blende (1) hergestellt ist.

3. Schmutzfänger (1) nach einem der vorhergehenden Ansprüche, wobei der erste (111) und der zweite (112) Flansch, der den Abstandshalter (11) bildet, konzentrisch mit der Verbindungsöffnung (14) sind.

4. Schmutzfänger (1) nach dem vorhergehenden Anspruch, wobei der Abstandshalter (11) mindestens zwei Rippen (113) aufweist, die den ersten Flansch (111) und den zweiten Flansch (112) verbinden.

5. Schmutzfänger (1) nach dem vorhergehenden Anspruch, wobei die Rippen (113) so ausgebildet sind, dass sie es dem Abstandshalter (11) ermöglichen, einem Spanndrehmoment von kleiner oder gleich 4Nm zu widerstehen.

6. Schmutzfänger (1) nach einem der Ansprüche 4 oder 5, wobei sich die Rippen (113) radial zur Verbindungsöffnung (14) erstrecken.

7. Schmutzfänger (1) nach einem der vorhergehenden Ansprüche, wobei der Abstandshalter (11) einen Stützrand (114a, 114b) aufweist, der parallel zu der Rückseite (13) des Schmutzfängers (1) verläuft, der an der Verbindungsöffnung (14) angreift.

8. Schmutzfänger (1) nach dem vorhergehenden Anspruch, bei dem die Stützkante (114a, 114b) in einem Abstand von mehr als oder gleich 5 mm von der Rückseite (13) der Schmutzfänger (1) angeordnet ist, die an der Verbindungsöffnung (14) angreift, vorzugsweise zwischen 6,5 mm und 7,5 mm.

9. Schmutzfänger (1) nach einem der Ansprüche 7 oder 8, bei dem der Stützrand (114a, 114b), der an dem ersten Flansch (111) aufgenommen ist, in einem ersten Abstand von der Rückseite (13) des Schmutzfängers (1) angeordnet ist, die an der Verbindungsöffnung (14) angreift, und Die am zweiten Kragen (112) angreifende Stützkante (114a, 114b) liegt in einem zweiten Abstand von der an der Fügeöffnung (14) angreifenden Rückseite (13) der Kotscheibe (1), wobei der erste Abstand kleiner als der zweite Abstand ist.

10. Radbaugruppe (20) für ein Kraftfahrzeug (5), wobei die Baugruppe umfasst:
- Schmutzfänger (1) nach einem der vorhergehenden Ansprüche;
- eine Vielzahl von Befestigungselementen (6), die mit jeder entsprechenden Verbindungsöffnung (14) der Kotscheibe (1) zusammenwirken, wobei jedes Befestigungselement (6) umfasst:
- ein Einsatz (61), der gleichzeitig die entsprechende Montageöffnung (14) der Kotscheibe (1) durchsetzt, und ein der Montageöffnung (14) gegenüberliegendes Licht der Struktur (4) des Kraftfahrzeugs (5);
- eine mit dem Einsatz (61) zusammenwirkende Befestigungsschraube (62).

## Claims

1. Sludge flask (1) of a motor vehicle (5) forming a bulkhead (10) that substantially describes a semicircle and defines a wheel housing (2) intended to accommodate a wheel (3) of a motor vehicle (5), the mud flask (1) comprising:
- a plurality of assembly openings (14), each assembly opening (14) being intended to receive an attachment part (6) of the said mudshield (1) to a structure (4) of the motor vehicle (5);
- a spacer (11) located at one of the assembly openings (14) and on a rear face (13) of the bulkhead (10) opposite the wheel housing (2) in relation to the bulkhead (10), the spacer (11) extending in relation to the rear face (13) of the bulkhead (10) (14) taken at the opening of the assembly;
characterized as the spacer (11) consists of a first collerette (111) and a second collerette (112), the first collerette (111) and the second collerette (112) being concentric between them.

2. Mudflap (1) according to the previous claim, in which the spacer (11) originates from material with the mudflap (1).

3. Mudflap (1) according to any of the previous claims, in which the first (111) and the second (112) collar forming the spacer (11) are concentric with the opening of the assembly (14).

4. Mudflap (1) according to the previous claim, in which the spacer (11) includes at least two ribs (113) connecting the first collar (111) and the second collar (112).

5. Mudflap (1) according to the previous claim, in which ribs (113) are configured to allow the spacer (11) to withstand a torque of 4 Nm or less.

6. Sludge flare (1) according to any of Claims 4 or 5, in which ribs (113) extend radially relative to the opening of the assembly (14).

7. Mudpiece (1) According to any of the preceding claims, in which the spacer (11) includes a support edge (114a, 114b) parallel to the rear face (13) of the mudguard (1) taken at the opening of the assembly (14).

8. Mudpiece (1) according to the previous claim, in which the support edge (114a, 114b) is located at a distance greater than or equal to 5 mm from the rear face (13) of the mudshield (1) taken at the opening of the assembly (14), preferably between 6.5mm and 7.5mm.

9. Mudflap (1) according to any of Claims 7 or 8, in which the support edge (114a, 114b) taken at the level of the first collerette (111) is located at the first distance from the rear face (13) of the mudflap (1) taken at the level of the assembly opening (14)), and the support edge (114a, 114b) taken at the level of the second collerette (112) is located at a second distance from the rear face (13) of the mudshield (1) taken at the opening of the assembly (14), the first distance being less than the second distance.

10. Wheel (3) set (20) of motor vehicle (5), that set comprising:
- a mud shield (1) according to any of the previous claims;
- a plurality of fastening devices (6) working with each corresponding assembly opening (14) of the mudshield (1), each fastening device (6) comprising:
- an insert (61) simultaneously passing through the corresponding assembly opening (14) of the mudshield (1) and a light of the structure (4) of the motor vehicle (5) next to the assembly opening (14);
- a fastening screw (62) working with the insert (61).
